# EUROPEAN PATENT APPLICATION

(11) **EP 2 186 420 A1**
(43) Date of publication of application: **19.05.2010**
(21) Application number: 08169320.2
(22) Date of filing: 18.11.2008
(51) Int. Cl.: A23G 1/00

(54) **High-fat cocoa product, a process for its manufacture and its application in confections**

(71) Applicant: Kraft Foods R & D, Inc., Northfield, IL 60093 (US)
(72) Inventor: Hennen, Jozef Christiaan, 80799 Munich (DE); Simbürger, Dieter Stephan, 81375 Munich (DE); Williams, Maria Florencia, 9000 Gent (BE)
(74) Representative: HOFFMANN EITLE

(57) **Abstract**

Cocoa liquor is subjected to a process whereby the cocoa butter is immobilized by the cocoa solids. This is achieved by forming a suspension of cocoa liquor in an aqueous medium and removing the aqueous medium component of the suspension. The resulting processed cocoa liquor does not leach cocoa butter when subjected to a temperature of 50°C overnight. The processed cocoa liquor is a useful ingredient in the food industry. It is a particularly useful ingredient for food stuffs where cocoa butter migration causes fat bloom. Replacement of standard cocoa liquor with the processed cocoa liquor of the invention greatly reduces fat bloom in confectionery products.

## Description

### Technical field

The present invention relates to a method for producing a cocoa based product in which cocoa fat has been immobilized. The cocoa based product is a useful ingredient in the food industry.

### Background of the invention

Cocoa liquor is a valuable commercial product obtained by processing the roasted nibs of the cocoa bean. The fatty component, also known as cocoa butter, may be separated from the components not soluble in the fatty component, also known as cocoa solids, by a number of physical methods known in the art such as those that involve hydraulic presses or the Broma process. An alternative to these is the liquid extraction method as described by US 7201934 where the inventors treat cocoa liquor with organic solvents to remove the cocoa butter thereby providing cocoa powder with a relatively low fat content compared to conventional cocoa powders.

Cocoa butter is an important ingredient in the manufacture of food products and is composed, in the main, of a polymorphic triglyceride fat fraction. The polymorphous fat has six different crystalline forms having melting temperatures from 17 to 37°C. When used in food products such as confectionery, the normally preferred polymorph is the relatively stable β_{VI}-crystalline form since this form exhibits superior shelf-life and aesthetic properties. It is the β_{VI}-crystalline form that imparts the characteristic sheen, smooth texture and snap characteristic associated with good quality chocolate.

Tempering is the step in chocolate manufacture where a mixture containing molten cocoa butter is cooled in a controlled fashion in order to crystallise it predominantly into the preferred polymorph. In addition, seeding crystals may be added such as those described in WO 00/72695, CA 2366346 and US 2005/0049426 where the addition of cocoa butter β_{VI}-crystals to molten chocolate increases the efficiency of crystallisation.

A cause for concern in the food industry is the appearance of fat bloom which leads to significant product loss. Fat bloom is a phenomenon that develops naturally with time but can be brought on prematurely by inadequate tempering or by variations in temperature associated with shipping and storage of a food product containing cocoa butter. It occurs when low melting crystalline forms of cocoa butter melt, allowing the fat to migrate to the surface where it recrystallises to leave a dull or mottled surface, with or without a white frosting or bloom that, although perfectly safe to eat, takes away from the aesthetic appearance of the product. The characteristic white spots or grey-white film is most commonly associated with confectionery such as chocolate but can occur with other foodstuffs such as chocobiscuits.

It would be considered an advancement in the art to suppress cocoa butter migration within a food matrix, thereby reducing or eliminating fat bloom, preferably without reducing the cocoa butter content or adversely affecting the taste of the food product. This invention provides a method of preparing a high-fat cocoa powder, which when used as an ingredient in the manufacture of confections, realises such goals.

### Disclosure of the Invention

The present invention discloses a process for producing processed cocoa liquor wherein the cocoa butter component is immobilized by the cocoa solids component. Cocoa liquor, which has undergone the process of this invention and where the cocoa butter is immobilized by the cocoa solids, will be referred to as "processed cocoa liquor". Cocoa liquor which has not undergone the process that is subject of this invention will simply be referred to as "cocoa liquor". The process for producing processed cocoa liquor comprises the steps of (1) suspending cocoa liquor in an aqueous medium and (2) removing the aqueous component from the resulting suspension by a drying process.

The present invention also discloses processed cocoa liquor, as obtainable by the process of the invention, wherein the cocoa butter component is immobilized by the cocoa solids component.

The inventors found that, surprisingly, the process of suspending cocoa liquor in an aqueous medium, and then removing the aqueous component from the resulting suspension by a drying process has the effect of immobilizing the cocoa butter by the non-fat cocoa solids present in the cocoa liquor. Without being bound by any specific theory, it is believed that the cocoa butter is immobilized by being encapsulated by the cocoa solids. It is hypothesised that, when suspended in an aqueous medium, in particular under high shear, the non-fat cocoa solids partly dissolve in the aqueous medium whereas the cocoa butter forms micro-droplets. Upon drying, the non-fat cocoa solids precipitate onto the surface of these micro-droplets, forming strong networks, from which the cocoa butter cannot leach out. As such, the cocoa butter can be considered to be immobilized by the cocoa solids.

More surprisingly, when this processed cocoa liquor is used as an ingredient to manufacture a food product, migration of molten cocoa butter within the resulting food matrix is suppressed, thus significantly reducing or eliminating fat bloom in said food product. The processed cocoa liquor significantly reduces fat bloom in confectionery products such as milk chocolate while being compliant with the EU Chocolate Directive (Directive 2000/36/EC).

Therefore, this invention relates to processed cocoa liquor in which the cocoa butter is immobilized, the process for producing the processed cocoa liquor and the use of said processed cocoa liquor in the manufacture of a food product, for example, a confectionery product.

### Figure

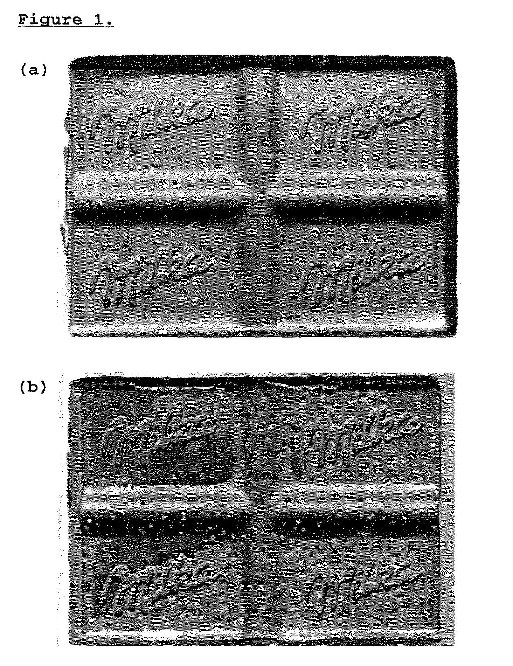

Figure 1 shows two samples of chocolate after the fat bloom test. The top sample (Fig. la) was manufactured according to Example 3 using processed cocoa liquor and exhibits no fat bloom. The bottom sample (Fig. 1b) was manufactured using standard cocoa liquor according to Comparative Example 3 and exhibits fat bloom.

### Detailed Description of the Invention

In the process of this invention, cocoa liquor is suspended in an aqueous medium. Cocoa liquors from (roasted nibs of) any cocoa bean, for example, the Forastero, Criollo and Trinitario varieties, are applicable for this invention. One variety of cocoa liquor or a blend from two or more varieties can be used. Both alkalized (dutched) and non-alkalized cocoa liquors are also applicable. The cocoa liquor of this invention is generally considered to comprise 47-55 wt.% fat, 15-17 wt.% protein, 11-13 wt.% carbohydrates, 17-20 wt.% fibre and 3-4 wt.% ash depending on regional variances in the cocoa bean and the manufacturing process used to obtain the liquor (De Zaan Cocoa Manual, 1999, De Zaan, The Netherlands).

Preferably, the cocoa liquor is in a molten state. Typically, the temperature of the molten cocoa liquor is between 35 and 100°C, and more preferably between 50 and 60°C. When cocoa liquor is molten, two phases tend to develop i.e. a cocoa butter phase and a cocoa solids phase. It is advantageous to mix the cocoa liquor so that the cocoa solids are dispersed uniformly in the cocoa butter before contacting the cocoa liquor and the aqueous medium.

The aqueous medium can be any polar aqueous food-grade solvent with a boiling point above the melting point of the cocoa liquor being used. Water or aqueous ethanol are typical examples of an aqueous medium that can be used, with water being most preferred. When a mixture of water and one or more food-grade solvents is used, the non-water solvents together make up 10% or less, by volume, of the total aqueous solution. Preferably, they make up 8% or less by volume and more preferably they make up 5% or less by volume of the total aqueous solution.

The aqueous medium may contain any additives, suspended or dissolved therein, that are commonly known and used in the food industry. The aqueous medium may be acidic, neutral or basic and should preferably be within the natural pH range of non-alkalized cocoa. More preferably, the pH of the aqueous medium should be between 5 and 8. The desired pH of the aqueous medium may be obtained by using any food-grade substances known in the art for adjusting pH such as citric acid, acetic acid, potash or NaOH. The aqueous medium may also contain surfactants or dispersants such as lecithin to prolong the stability of the created suspension. When surfactants or dispersants are used, they are present at less than 10 wt.% of the solution, preferably less than 8 wt.% and more preferably less than 5 wt.% of the solution.

To avoid fast solidification of the cocoa liquor when it is contacted with the aqueous medium, the temperature of the aqueous medium should be between 35 and 100°C, more preferably between 50 and 60°C and most preferably at a temperature higher than that of the molten liquor.

The cocoa liquor and aqueous medium suspension may contain up to 40 wt.% cocoa liquor and preferably 15 to 30 wt.% cocoa liquor. Consequently, the aqueous medium should make up 60 wt.% or more and preferably 70 to 85 wt.% of the suspension. When the drying process is spray-drying, then the suspension preferably contains 15 to 30 wt.% cocoa liquor.

For contacting the cocoa liquor and the aqueous medium, it is possible to add either the cocoa liquor to the aqueous medium, or vice versa. The suspension is typically produced by mixing the molten cocoa liquor and the aqueous medium under high shear. All kinds of commercially available high shear mixers such as, but not limited to, Ultraturrax, Silverson, Stephan cooker or colloid mill are applicable. Those allowing a rotational speed between 1,000 and 50,000 rpm are preferred. The mixture of cocoa liquor and aqueous medium can be considered fully dispersed as soon as the two phases are not visible anymore and a uniform brown suspension is formed. The time taken for a complete dispersion depends on the amount of cocoa liquor to be dispersed. As an example, 40 wt.% cocoa liquor in aqueous medium may take about 9-10 minutes to bring into suspension whereas 20 wt.% cocoa liquor may take about 1-3 minutes.

Generally, the cocoa liquor used in the suspension has not undergone any treatment to reduce the fatty component that was present in the original cocoa liquor. In the case where any treatment should be applied, apart from melting and suspending the cocoa liquor in the aqueous medium, preferably at least 90 wt.%, more preferably at least 95 wt.% and most preferably at least 98 wt.% of the fatty component of the original cocoa liquor remains. The weight percent of the fatty component may be determined by any method known in the art such as Soxhlet extraction.

If desired, it is also possible to add cocoa butter to the cocoa liquor thus increasing the total fat content of the cocoa liquor before subjecting it to the processes described in this invention. It was observed that cocoa liquor with cocoa butter to cocoa solids ratio of up to 70:30 may be used without compromising the cocoa butter immobilization.

Once a stable dispersion is achieved, the aqueous component can be removed. This may be accomplished by any drying process known in the art such as freeze drying, spray drying, roller drying, fluidized bed drying or any combinations thereof. Preferably, freeze drying or spray drying, and more preferably freeze drying is used.

In the freeze drying process, the resulting dispersion is quickly cooled until the suspension is frozen solid. Any procedure known in the art for quickly freezing liquids or suspensions may be used to freeze the suspension. The time for cooling down the suspension to solidification should be such that phase separation of the suspension does not occur to any detrimental extent. Typical examples of applicable procedures for quickly freezing the suspension include the use of liquid nitrogen or a cooling cabinet. The suspension may be cooled to any temperature that solidifies the aqueous medium. For example, temperatures of -196°C (liquid nitrogen) and -40°C (cooling cabinet) were successfully used. When liquid nitrogen is used, the vessel containing the suspension or the suspension itself may be immersed in the liquid nitrogen. Typically, the lower the temperature used, the faster the suspension solidifies. A faster solidifying process is advantageous if the suspension is an unstable dispersion.

The solid suspension formed on cooling may be dried by removing the aqueous component and any of the food grade solvents under reduced pressure. Aqueous component and solvent removal may be performed in a commercially available freeze-dryer at pressures ranging from 1 to 10 mbar. At these pressures, the temperature of the solid suspension is gradually increased from the cooling temperature to ambient temperature, e.g. 20°C, 25°C or 30°C, as the aqueous component and the food grade solvent is removed. The time required to perform the freeze-drying step depends on the amount of solid suspension loaded into the freeze-dryer at a certain temperature and pressure. Although not a limiting feature of this invention, it is preferred that the freeze-drying step is performed in less than 20 hours to save on costs and time. As a non-limiting example, it was observed that 3 kg of frozen suspension usually takes about 17 hrs to dry. The frozen suspension may also be broken up into smaller particles by cryo-grinding to facilitate a faster drying process.

The drying process can be considered complete as soon as the temperature of the dried product, i.e. the processed liquor, is ambient. If the drying process is incomplete, the final processed liquor contains too much residual water and appears to melt, or re-form a suspension. If the drying process is complete, then the processed liquor has the appearance of a dry solid. Water content may be assessed by any method known in the art for such determination such as infrared spectroscopy or microwave drying. Typically, after a successful drying procedure, the water content is less than 3 wt.%, less than 2.8 wt.% or less than 2 wt.%.

The processed liquor is a solid at temperatures up to 50°C. More specifically, it is a powder, even more specifically a powder having an average particle size of less than 50 µm. Typically, the average particle size is between 15 and 20 µm as determined by microscopic measurements.

In the spray-drying process, the above-described suspensions are spray dried using any commercially available spray-drier. Typically, the suspension is dried at air temperatures of between 100 and 200°C, more preferably between 120 and 180°C and most preferably between 130 and 160°C. The resulting powder shows the same physical and heat resistant properties as the powder obtained by the freeze-drying process such as remaining as a solid powder at temperatures up to 50°C and not leaching cocoa liquor onto filter paper as described below.

The cocoa butter in the processed cocoa liquor of the invention is believed to be immobilized by the cocoa solids that were present in the original cocoa liquor. This is most easily demonstrated by placing similar amounts of untreated cocoa liquor and processed cocoa liquor samples onto a piece of filter paper. After leaving to stand overnight at 50°C, cocoa butter from the untreated sample visibly leaches out of the cocoa liquor and into the filter paper. No cocoa butter leaches out from the processed cocoa liquor. "Overnight" is understood to mean any length of time between 10 and 18 hours.

A useful application of the processed liquor is as an ingredient in the manufacture of food products. One particularly useful application is as an ingredient in food products that are susceptible to cocoa butter migration. Since the cocoa butter of the processed liquor is immobilized by the cocoa solids, migration of cocoa butter in food products that utilise this ingredient is greatly reduced. A particular example is in confectionery products. The advantage of applying processed liquor as an ingredient in confections is the suppression of cocoa butter migration within the confectionery matrix, thus eliminating or reducing fat bloom. The processed cocoa liquor is envisaged as a suitable ingredient for all food stuffs that experience fat bloom due to cocoa butter migration.

Some food manufacturing processes utilise the properties imparted by cocoa butter (e.g. fluidity properties needed for pouring molten chocolate). The cocoa butter of the processed cocoa liquor is immobilized by the cocoa solids and so does not impart such properties. If required, extra fat such as anhydrous milk fat can be added to food products using processed cocoa liquor as an ingredient to restore the desired properties. For example, the processed cocoa liquor of the invention can be used to replace or supplement standard cocoa liquor in the production of chocolate, in particular milk chocolate (as defined in the EU directive) or dark chocolate. Extra fat such as anhydrous milk fat is added to the chocolate containing the processed cocoa liquor. Therefore, the total fat content of the chocolate containing processed cocoa liquor is generally higher than chocolate using untreated cocoa liquor. Any fat that is compliant with the EU Chocolate Directive can be used in such manner.

The processed cocoa liquor of the invention can also be used to replace standard cocoa liquor in the production of heat resistant chocolate. The difference between heat resistant chocolate and normal chocolate is that heat resistant chocolate does not become soft and sticky at 30°C and does not melt at 50°C whereas normal chocolate does. Heat resistance is achieved, for example, by addition of moisture to the liquid chocolate mass, followed by thermal treatment. Heat resistant chocolate is chocolate which can be exposed to temperatures higher than the melting range of cocoa butter, as described in EP 1673977 (Kraft Foods).

The following Examples are non-limiting and describe possible processes for manufacturing the processed cocoa liquor and applications as an ingredient thereof.

### Examples

### Example 1 - Processed cocoa liquor

Example 1 describes a process for producing processed cocoa liquor. The processed cocoa liquor may be produced by a variety of different cooling and drying methods. In each case the product obtained exhibits the same heat resistant properties.

Cocoa liquor is melted in a heating chamber at 50°C. Once melted, the cocoa liquor is mixed for 10 min with an Ultra-Turrax high-shear mixer. 40 g of the freshly mixed cocoa liquor is suspended in 60 g of hot water (pre-heated to 100°C) with an Ultra-Turrax at 24000 rpm for approximately 2 min. The resulting suspension was frozen with liquid nitrogen by immersing the vessel containing the suspension in liquid nitrogen. In another experimental run, the suspension was cooled to -40°C using a cooling cabinet. In both cases, the frozen suspension was freeze-dried at 1-2 mbar while the temperature was gradually increased from -196°C (cooling with liquid nitrogen) or -40°C (cooling with a cooling cabinet) to 30°C. After the drying was complete, the obtained powder was tested for fat content and cocoa butter leaching. Fat content was determined after Soxhlet extraction. Fat content was found to be the same as the original cocoa liquor for the products obtained by the different cooling methods. Cocoa butter leaching was determined by placing the resultant powder on a filter paper at 50°C overnight. No apparent leaching of cocoa butter from the products of both cooling methods was observed.

The processed cocoa liquor described above was also obtained by a spray-drying process. In this case, the cocoa liquor suspension was subjected to a spray-drying process using a mini spray-drier (Büchi B-290). The suspension was spraydried at air temperatures between 130 and 160°C. The resulting powder, i.e. processed cocoa liquor, showed the same fat content and heat resistant properties as the processed cocoa liquor obtained from the freeze-drying process.

### Example 2 - Fat bloom resistant chocolate

Example 2 describes the manufacture of a chocolate using the processed cocoa liquor of the invention as an ingredient. In order to identify the bloom resistant properties of products that use the processed cocoa liquor, two chocolates were prepared based on the same recipe and differing only in the type of cocoa liquor; one containing processed cocoa liquor of the invention (Example 2) and the other standard cocoa liquor (Comparative Example 2).

The ingredients in Table 1 were mixed.

**Table 1**

| Basic Ingredients | Example 2 (wt.%) | Comparative Example 2 (wt.%) |
|---|---|---|
| | | |
| Sugar | 39.60 | 39.60 |
| Cocoa butter | 4.65 | 4.65 |
| Processed cocoa liquor | 15.25 | -- |
| Untreated cocoa liquor | -- | 15.25 |
| Anhydrous milk fat | 18.81 | 18.81 |
| WPC35 (whey protein concentrate) | 12.20 | 12.20 |
| SWP (Sweet whey powder) | 8.80 | 8.80 |
| Lecithin | 0.68 | 0.68 |
| Vanillin | 0.01 | 0.01 |

After mixing, the mixtures were subjected to a conching process according to Table 2.

**Table 2**

| Time (s) | Speed (rpm) | Rotation | Temp. (°C) |
|---|---|---|---|
| | | | |
| 1,800 | 60 | right | 40 |
| 1,800 | 60 | right | 50 |
| 1,800 | 100 | right | 58 |
| 1,800 | 100 | right | 63 |
| 1,800 | 100 | left | 67 |
| 14,400 | 100 | left | 70 |
| 900 | 100 | right | 70 |

After conching, both chocolate masses were partly tempered and then moulded into tablets. The chocolate tablets were subjected to a fat bloom test for normal chocolate as described below. The tablets containing processed cocoa liquor did not show fat bloom whereas the tablets containing untreated cocoa liquor did.

### Example 3 - Fat bloom and heat-resistant chocolate

In order to produce a heat resistant chocolate, both conched masses as described in Example 2 were further treated as described in EP 1673977 to prepare heat resistant chocolate with processed cocoa liquor (Example 3) and untreated cocoa liquor (Comparative Example 3). The chocolate from the conching step was mixed with an emulsifier (polyglyceryl polyricinoleate (0.5 wt.%)) to reduce its yield value. Water was further added in the form of Sorbidex (9.2 wt.%). The final concentration of water and total fat was 3.8 wt.% and 29.3 wt.% respectively. The chocolate mass was moulded and subjected to microwave radiation (belt speed 4.5 m/min, temperature achieved 90°C). The final chocolate was subjected to a fat bloom test at higher temperatures as described below (determination of fat bloom for heat resistant chocolate). For heat resistant chocolate, form stability (up to 50°C) and reduced fat bloom were observed.

### Fat bloom determination (chocolate according to Example 2)

Seven samples each of the chocolates from Example 2 using processed cocoa liquor and standard cocoa liquor were heated to 50°C for 2 hours in closed packaging. After 2 hours, one sample of each chocolate was incubated at -20°C, 4°C, 16°C, 22°C, 34°C for exactly 24 hours. After 24 hours, all samples were incubated at 22°C for 3 days. Samples were removed after 3 days and visually inspected for fat bloom. A sample was considered to have fat bloom if a different colour (reflected light disorganized by surface crystal growth) was observed or whitish spots or a streaky grey-white finish was apparent. Assessment was conducted by an expert panel.

The chocolate samples which used standard cocoa liquor developed specks on the surface due to cocoa butter migration and re-crystallisation (at all temperatures) while the chocolate samples with the processed cocoa liquor did not show fat bloom at any of the temperatures tested.

### Fat bloom determination (heat resistant chocolate according to Example 3)

Seven samples each of the chocolates from Example 3 using processed cocoa liquor and untreated cocoa liquor were heated to 50°C for 2 hours in closed packaging. After 2 hours, one sample of each chocolate was incubated at -20°C, 4°C, 16°C, 22°C, 30°C, 40°C and 50°C for exactly 24 hours. After 24 hours, all samples were incubated at 22°C for 3 days. Samples were removed after 3 days and visually inspected for fat bloom. A sample was considered to have fat bloom if a different colour (reflected light disorganized by surface crystal growth) was observed or whitish spots or a streaky grey-white finish was apparent. Assessment was conducted by an expert panel. Figure 1 shows typical chocolate samples with (top) and without (bottom) fat bloom.

The chocolate samples which used untreated cocoa liquor developed specks on the surface due to cocoa butter migration and re-crystallisation (at all temperatures) while the chocolate samples with the processed cocoa liquor did not show fat bloom at any of the temperatures tested.

### Determination of heat-resistance

Heat-resistance may be determined by exposing the moulded chocolate to temperatures of between 40°C and 50°C for 2 hours. Heat resistant chocolates will maintain their form under such heat abuse conditions whereas normal chocolate will not. In addition to simply visible means, heat resistance can also be determined by measuring the penetration force using a Stevens texture analyzer (e.g. 45° cone with a speed of 2mm/s to a depth of 3 mm) after the product is stored at 50°C for 2 hours. Typically, heat resistant chocolate products of this invention will exhibit a penetration force of about 90 g or higher when exposed to 50°C for 2 hours. The heat resistant and fat bloom resistant chocolate showed a penetration force of 103 g. The heat resistant chocolate made with standard cocoa liquor showed a penetration force of 95 g. This reduced value may be due to an increased amount of free fat in the chocolate using standard cocoa liquor (fat is not encapsulated). Conventional chocolate products normally exhibit a penetration force of about 55 g or less under such conditions.

## Claims

1. A process for processing cocoa liquor, comprising the steps of:
(1) contacting cocoa liquor and an aqueous medium to form a suspension and
(2) removing the aqueous component from the suspension by a drying process to obtain processed cocoa liquor.

2. The process of Claim 1, wherein the cocoa liquor in step (1) is in a molten state.

3. The process of Claim 1 or 2, wherein the suspension in step (1) contains up to 40 wt.% of cocoa liquor and 60 wt.% or more of the aqueous medium.

4. The process of any one of Claims 1 to 3, wherein the drying process in step (2) is selected from the group consisting of freeze drying, spray drying, roll drying and fluidized bed drying.

5. The process of Claim 4 where the suspension is solidified prior to step (2) and the drying process in step (2) is freeze-drying.

6. The process of any one of Claims 1 to 5, wherein the processed cocoa liquor is a powder having water content of less than 3 wt.%

7. Processed cocoa liquor, obtainable by the process as defined in any one of Claims 1 to 6.

8. Use of the processed cocoa liquor as defined in Claim 7 in the manufacture of a food product.

9. A food product comprising the process cocoa liquor as defined in claim 7.

10. The use according to claim 8 or food product according to claim 9, wherein the food product is a confectionery product.

11. The use or food product according to claim 10, wherein the confectionery product is a chocolate, in particular milk chocolate or dark chocolate.

12. The use or product according to claim 11, wherein the chocolate is heat resistant.

## Amended claims

### Amended claims in accordance with Rule 137(2) EPC.

**9.** A food product comprising the processed cocoa liquor as defined in claim 7.

**10.** The use according to claim 8 or food product according to claim 9, wherein the food product is a confectionery product.

**11.** The use or food product according to claim 10, wherein the confectionery product is a chocolate, in particular milk chocolate or dark chocolate.

**12.** The use or product according to claim 11, wherein the chocolate is heat resistant.
